(19) Europäisches Patentamt
European Patent Office
Office européen des brevets

(11) EP 3 163 790 A1

(12) EUROPEAN PATENT APPLICATION

(43) Date of publication:
03.05.2017 Bulletin 2017/18

(51) Int Cl.:
H04L 9/08 (2006.01)

(21) Application number: 15202533.4

(22) Date of filing: 23.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.10.2015 TW 104135765

(71) Applicant: Industrial Technology Research
Institute
Hsinchu 31040 Taiwan (TW)

(72) Inventors:
• HONG, Yao-Win
Hsinchu County 302 (TW)
• HUANG, Lin-Ming
Pingtung County 912 (TW)
• LIU, Ta-Yuan
Taichung City 412 (TW)
• SHEU, Chorng-Ren
31040 Hsinchu (TW)

(74) Representative: Epping - Hermann - Fischer
Patentanwaltsgesellschaft mbH
Schloßschmidstraße 5
80639 München (DE)

(54) **VECTOR QUANTIZATION BASED SECRET KEY GENERATION DEVICE AND METHOD**

(57) The present disclosure provides a vector quantization based secret key generation device and method. The vector quantization based secret key generation device includes: a channel estimator for estimating a channel based on received signals to generate an estimated channel vector; a channel decorrelator for decorrelating entries of the estimated channel vector to generate a decorrelated estimated channel vector; a plurality of clustered vector quantizers (CVQs) each for quantizing the decorrelated estimated channel vector into a secret key or a secret key index; and a selector for selecting an optimal quantizer output from the plurality of CVQs and determining whether to discard the decorrelated estimated channel vector to reduce key disagreement probability (KDP). Therefore, the present disclosure provides a secret key generation technique that is capable of increasing key entropy and reducing KDP.

FIG. 1

**Description**

TECHNICAL FIELD

The present disclosure relates to a vector quantization based secret key generation device and method.

BACKGROUND

Along with users' increasing reliance on mobility and ubiquitous connectivity, more and more confidential or private information is transmitted over wireless media. However, due to the broadcast nature of wireless transmissions, communications over the wireless media may be vulnerable to signal interception or eavesdropping by unauthorized receivers.

A conventional channel based secret key generation (SKG) scheme utilizes uniqueness of a channel between two (or more) communication terminals as common randomness to generate shared secret keys at the communication terminals. In particular, scalar quantization is usually used to generate secret keys, through which each entry of a channel vector is quantized separately. However, such a method likely results in low key entropy and high key disagreement probability (KDP), especially when channel estimates are highly correlated. Further, when an eavesdropper is close by and observes a channel that is highly correlated with the communication terminals, the randomness or conditional entropy of secret keys may be reduced significantly, causing the keys to be easily guessable by the eavesdropper.

Therefore, there is a need to provide a vector quantization based secret key generation device and method so as to overcome the above-described drawbacks.

SUMMARY

The present disclosure provides a vector quantization based secret key generation technique so as to increase key entropy and reduce key disagreement probability (i.e., the probability of generating different keys at two communication terminals).

The present disclosure provides a vector quantization based secret key generation device, which comprises: a channel estimator for estimating a channel based on received signals to generate an estimated channel vector; a channel decorrelator for decorrelating entries of the estimated channel vector to generate a decorrelated estimated channel vector or a channel sample; a plurality of clustered vector quantizers (CVQs) each for quantizing the decorrelated estimated channel vector or the channel sample into a secret key or a secret key index; and a selector for selecting an optimal quantizer output from the plurality of CVQs and determining whether to discard the decorrelated estimated channel vector or the channel sample to reduce key disagreement probability (KDP).

The present disclosure also provides a vector quantization based secret key generation system comprising a receiver and a transmitter. Each of the receiver and the transmitter comprises: a channel estimator for estimating a channel based on received signals to generate an estimated channel vector; a channel decorrelator for decorrelating entries of the estimated channel vector to generate a decorrelated estimated channel vector or a channel sample; a plurality of CVQs each for quantizing the decorrelated estimated channel vector or the channel sample into a secret key or a secret key index; and a selector for selecting an optimal quantizer output from the plurality of CVQs to generate an optimal quantizer index and determining whether to discard the decorrelated estimated channel vector or the channel sample to reduce KDP. In an embodiment, the selector of the transmitter transmits the optimal quantizer index and the determination of whether to discard the decorrelated estimated channel vector or the channel sample to the selector of the receiver.

The present disclosure further provides a vector quantization based secret key generation method, which comprises: estimating a channel based on received signals to generate an estimated channel vector; decorrelating entries of the estimated channel vector to generate a decorrelated estimated channel vector or a channel sample; quantizing the decorrelated estimated channel vector or the channel sample into a secret key or a secret key index; and selecting an optimal quantizer output from a plurality of quantizers and determining whether to discard the decorrelated estimated channel vector or the channel sample to reduce KDP.

According to the present disclosure, a plurality of CVQs are used to quantize a decorrelated estimated channel vector or a channel sample into a secret key or a secret key index, and then a selector is used to select an optimal quantizer output from the plurality of CVQs and determine whether to discard the decorrelated estimated channel vector or the channel sample to reduce KDP. Therefore, the present disclosure provides a secret key generation technique that is capable of increasing key entropy and reducing KDP.

BRIEF DESCRIPTION OF DRAWINGS

FIG. 1 is a schematic block diagram of a communication terminal of a vector quantization based secret key generation device according to an embodiment of the present disclosure;
FIG. 2 is a schematic block diagram of a receiver and a transmitter of a vector quantization based secret key generation device according to an embodiment of the present disclosure;
FIG. 3 is a schematic block diagram of a secret communication system;
FIG. 4 is a schematic diagram showing an example of a clustered vector quantizer (CVQ);
FIG. 5 is a schematic diagram showing an example of key disagreement;
FIG. 6 is a schematic diagram showing an example of quantizer selection with two CVQs;
FIG. 7 is a schematic diagram showing a design flow of a CVQ;
FIG. 8 is a schematic flow diagram showing an algorithm for designing an entropy-constrained minimum quadratic distortion (EC-MQD) fine quantizer;
FIG. 9 is a schematic flow diagram showing an algorithm for designing an entropy-constrained minimum key disagreement probability (EC-MKDP) fine quantizer;
FIG. 10 is a schematic flow diagram showing an algorithm for a clustered key mapping design;
FIG. 11 is a schematic flow diagram showing a vector quantization based secret key generation method according to the present disclosure; and
FIGs. 12 and 13 are graphs showing performance comparisons between the present disclosure and the prior art.

DETAILED DESCRIPTION

The following illustrative embodiments are provided to illustrate the present disclosure. These and other advantages and effects may be apparent to those in the art after reading this specification. It should be noted that all the drawings are not intended to limit the present disclosure. Various modifications and variations may be made without departing from the spirit of the present disclosure.

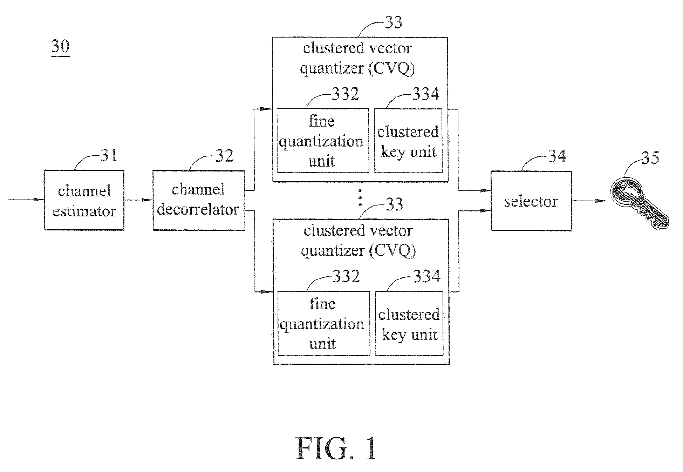

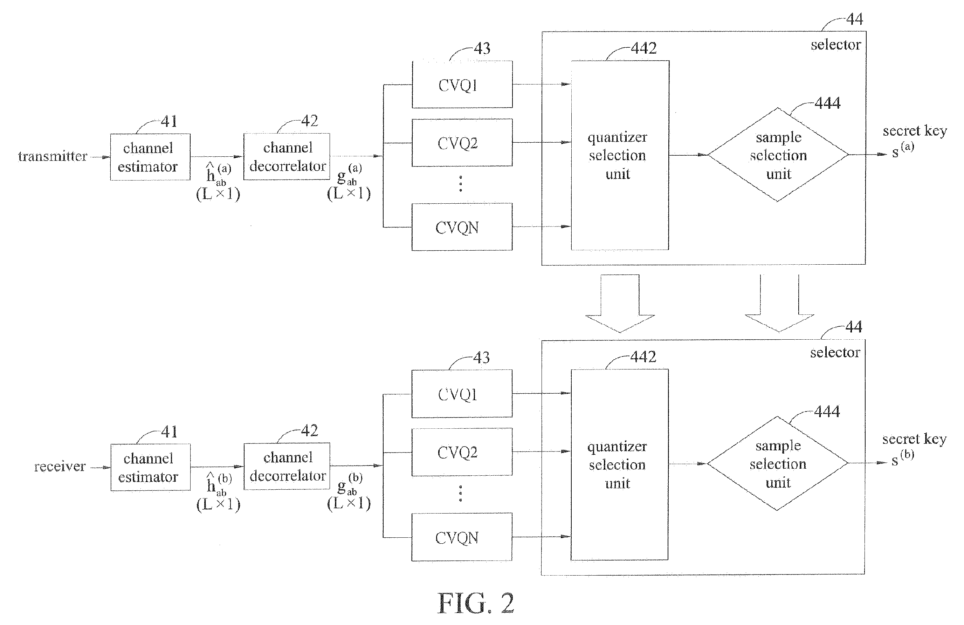

FIGs. 1 and 2 show embodiments of a vector quantization based secret key generation (SKG) device 30 according to the present disclosure. In particular, FIG. 1 illustrates the structure of a communication terminal, and FIG. 2 illustrates the structure of a receiver and a transmitter. The drawings may be crossly referred, and the embodiments of the drawings may be applied in such as device-to-device (D2D) communications and wireless sensor networks (WSNs).

Referring to FIG. 1, the secret key generation device 30 has: a channel estimator 31 for estimating a channel based on received signals so as to generate an estimated channel vector; a channel decorrelator 32 for decorrelating entries of the estimated channel vector so as to generate a decorrelated estimated channel vector or a channel sample; a plurality of clustered vector quantizers (CVQs) 33 each for quantizing the decorrelated estimated channel vector or the channel sample into a secret key or a secret key index; and a selector 34 for selecting an optimal quantizer output from the plurality of CVQs 33 and determining whether to discard the decorrelated estimated channel vector or the channel sample so as to reduce key disagreement probability (KDP). As such, a secret key 35 is generated.

Referring to FIG. 2, the secret key generation device 30 is applied to a receiver and a transmitter. Each of the receiver and the transmitter has: a channel estimator 41 for estimating a channel based on received signals so as to generate an estimated channel vector; a channel decorrelator 42 for decorrelating entries of the estimated channel vector so as to generate a decorrelated estimated channel vector or a channel sample; a plurality of CVQs 43 each for quantizing the decorrelated estimated channel vector or the channel sample into a secret key or a secret key index; and a selector 44 for selecting an optimal quantizer output from the plurality of CVQs 43 so as to generate an optimal quantizer index and determining whether to discard the decorrelated estimated channel vector or the channel sample so as to reduce KDP. Further, the selector 44 of the transmitter transmits the optimal quantizer index and a determination of whether to discard the decorrelated estimated channel vector or the channel sample to the selector 44 of the receiver, thus allowing the transmitter and the receiver to choose the same quantizer and the same decorrelated estimated channel vector or channel sample.

In an embodiment, each of the selectors of FIGs. 1 and 2 (for example, each of the selectors 44) may include a quantizer selection unit 442 for selecting the optimal quantizer output so as to reduce the KDP. In another embodiment, each of the selectors of FIGs. 1 and 2 (for example, each of the selectors 44) may include a sample selection unit 444 for determining whether to discard the decorrelated estimated channel vector or the channel sample so as to reduce the KDP. In yet another, the sample selection unit 444 of the transmitter transmits the determination of whether to discard the decorrelated estimated channel vector or the channel sample to the sample selection unit 444 of the receiver. As such, the transmitter and the receiver have the same information about the determination of whether to discard the decorrelated estimated channel vector or the channel sample.

The vector quantization based secret key generation device 30 and method according to the present disclosure may be applied in user equipment (UE) such as a mobile station, an advance mobile station (AMS), a server, a client, a desktop computer, a laptop computer, a network computer, a workstation, a personal digital assistant, a tablet personal computer, a scanner, a telephone device, a pager, a camera, a TV, a handheld video game device, a music device, or a wireless sensor. In some applications, the user equipment may be a fixed computer device operating in a mobile environment of, for example, a bus, a train, a plane, a ship, or a car.

In an embodiment, the user equipment may have, but not limited to, at least a receiver (or receiving circuit), an A/D converter coupled to the receiver, and a processor (or processing circuit) coupled to the A/D converter. The receiver is used for wirelessly receiving signals, and performing operations such as low noise amplification, impedance matching, frequency mixing, frequency up/down conversion, filtering and amplification. The A/D converter is used for converting signals from analog to digital. The processor is configured for processing digital signals and at least performing the function of vector quantization based secret key generation according to the present disclosure. The function of the processor may be implemented with, for example, a microprocessor, a microcontroller, a digital signal processing (DSP) chip, or a programmable unit, e.g., FPGA (field programmable gate array). Alternatively, the function of the processor may be implemented with a separate electronic device or integrated circuit.

The vector quantization based secret key generation device according to the present disclosure is detailed as follows.

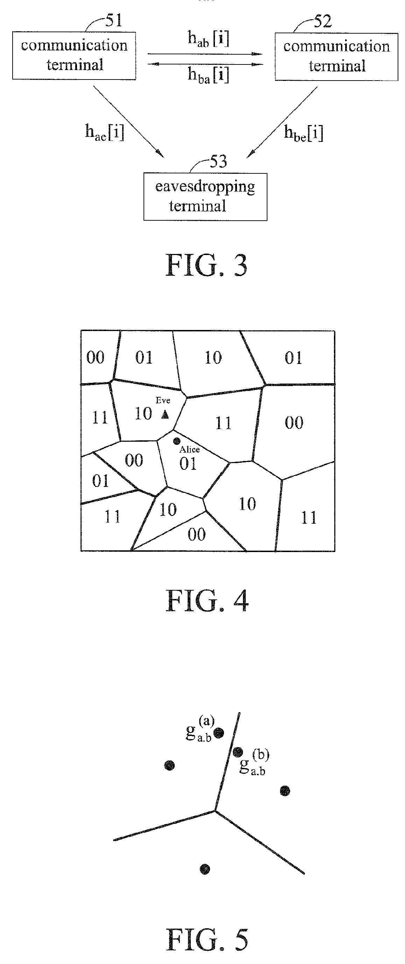

FIG. 3 is a schematic diagram of a secret communication system. Referring to FIG. 3, the secret communication system has two communication terminals 51 and 52, which are, for example, Alice and Bob, respectively, and intend to generate a shared secret key between each other, without revealing any information about it to an eavesdropper, for example, Eve, at an eavesdropping terminal 53. In the secret communication system, the secret key is generated based on local estimates of a channel between Alice and Bob.

Referring to FIGs. 2 and 3, a channel based secret key generation (SKG) procedure according to the present disclosure is illustrated.

In particular, Alice and Bob first take turns transmitting pilot signals as receiving signals so as to enable channel estimation at the other side. The channel is assumed to be reciprocal (that is, the channel from Alice to Bob is the same as that from Bob to Alice), but some estimation errors may occur due to hardware mismatch or temporal variations. $\mathbf{h}_{ab}$ represents an L×1 channel vector between Alice and Bob, and

$$\hat{\mathbf{h}}_{ab}^{(a)} = \mathbf{h}_{ab} + \Delta\mathbf{h}_{ab}^{(a)} \quad \text{and}$$

$$\hat{\mathbf{h}}_{ab}^{(b)} = \mathbf{h}_{ab} + \Delta\mathbf{h}_{ab}^{(b)} \text{ are estimated channel vec-}$$

tors obtained by Alice and Bob, respectively, where $\Delta\mathbf{h}_{ab}^{(a)}$ and $\Delta\mathbf{h}_{ab}^{(b)}$ are estimation errors. Here, $\Delta\mathbf{h}_{ab}^{(a)}$ and $\Delta\mathbf{h}_{ab}^{(b)}$ are assumed to have the same statistics. Entries of the channel vector $\mathbf{h}_{ab}$ may correspond to channel coefficients on different temporal, spectral (e.g., OFDM systems), or spatial dimensions (e.g., MIMO systems). By observing the pilot signals emitted by Alice and Bob, Eve is also able to obtain an estimate of the channel vector $\mathbf{h}_{ab}$, which is denoted by $\hat{\mathbf{h}}_{ab}^{(e)}$.

The accuracy of this estimate depends on the correlation between the main and the eavesdropper channels. For example, if a linear MMSE estimator is adopted by Eve, the estimated channel vector may be written as

$$\hat{\mathbf{h}}_{ab}^{e} = \mathbf{C}_{\mathbf{h}_{ab}\mathbf{y}_e}\mathbf{C}_{\mathbf{y}_e\mathbf{y}_e}^{-1}\mathbf{y}_e, \text{ where } \mathbf{y}_e \text{ is a received}$$

signal vector at Eye, $\mathbf{C}_{\mathbf{h}_{ab}\mathbf{y}_e}$ is a cross covariance matrix between $\mathbf{h}_{ab}$ and $\mathbf{y}_e$, and $\mathbf{C}_{\mathbf{y}_e\mathbf{y}_e}$ is a covariance matrix of $\mathbf{y}_e$.

Then, the estimated channel vectors obtained by Alice and Bob are each passed through a decorrelator to obtain effective channel vectors $\mathbf{g}_{ab}^{(a)}$ and $\mathbf{g}_{ab}^{(b)}$ with independent entries. In particular, by choosing a decorrelating matrix D such that

$$\mathbf{C}_{\hat{\mathbf{h}}_{ab}^{a}} = \mathbf{C}_{\hat{\mathbf{h}}_{ab}^{b}} = \mathbf{D}\mathbf{D}^{H},$$

$$\mathbf{g}_{ab}^{(a)} \triangleq \mathbf{D}^{-1}\hat{\mathbf{h}}_{ab}^{(a)} \text{ and } \mathbf{g}_{ab}^{(b)} \triangleq \mathbf{D}^{-1}\hat{\mathbf{h}}_{ab}^{(b)} \text{ with}$$

$$\mathbf{C}_{\mathbf{g}_{ab}^{a}} = \mathbf{C}_{\mathbf{g}_{ab}^{b}} = \mathbf{I} \text{ are obtained. In this case, the}$$

signal-to-noise ratio (SNR) of the $i$-th entry is $\lambda_i P/\sigma_n^2$, where $\lambda_i$ is the eigenvalue of $\mathbf{C}_{\mathbf{h}_{ab}}$. It should be noted that $\mathbf{C}_{\mathbf{h}_{ab}}$ may depend on various channel parameters such as scattering, velocity and subcarrier spacing. The vector $\mathbf{g}_{ab}^{(a)}$ at Alice then passes through a bank of $N$ clustered vector quantizers (CVQs), and a similar process is performed on the vector $\mathbf{g}_{ab}^{(b)}$ at Bob. Each of the CVQs outputs a secret key, depending on which quantization region the effective channel vector $\mathbf{g}_{ab}^{(a)}$ or $\mathbf{g}_{ab}^{(b)}$ falls into. Among the $N$ CVQ outputs, Alice first selects one that is least likely to result in key disagreement with Bob and sends the quantizer index to Bob. Bob then chooses the same quantizer for quantizing its own channel vector. If the selected quantizer output is still likely to result in key disagreement, the channel sample (or channel vector) is then dropped. The design of the CVQs increases the randomness of the secret key and makes it more difficult for Eve to guess the value of the secret key On the other hand, the quantizer section and sample selection facilitate to reduce the KDP.

In an embodiment, the quantizer selection unit 442 and the sample selection unit 444 are used to reduce the KDP. The quantizer selection unit 442 allows one terminal to choose from a plurality of CVQs the one that is expected to yield the lowest KDP. If the KDP is still expected to be high after the quantizer selection unit 442, the sample selection unit 444 allows one terminal to throw away a decorrelated channel sample (or its generated secret key).

Further, referring to FIG. 1, each of the CVQs has a fine quantization unit 332 and a clustered key unit 334 for computing with a fine quantization function and a clustered key mapping function, respectively, so as to quantize the decorrelated estimated channel vector or the channel sample into a secret key or a secret key index.

In particular, the CVQ may be viewed as the composition of the fine quantization function and the clustered key mapping function.

The fine quantization function is

$$Q : \mathbb{C}^L \to \{1, \ldots, M\},$$ which maps the effective channel vector $\mathbf{g}_{ab}^{(a)}$ (or $\mathbf{g}_{ab}^{(b)}$) to an integer from 1 to M. The clustered key mapping function is $S : \{1,\ldots, M\} \to \{\mathbf{s}_1,\ldots, \mathbf{s}_K\}$ where $\mathbf{s}_k$ is a $\log_2 K$-bit secret key or a secret key index, and K is the number of secret keys and it is less than or equal to M. The key that is assigned to the channel vector $\mathbf{g}_{ab}^{(a)}$ is thus given by

$$S(Q(\mathbf{g}_{ab}^{(a)}))$$ The fine quantization function Q is specified by regions $\mathcal{R}_1, \ldots, \mathcal{R}_M$ so that

$$Q(\mathbf{g}_{ab}^{(a)}) = m$$ if $\mathbf{g} \in \mathcal{R}_m$. It should be noted that the output of the fine quantization may take on M different values, whereas the number of secret keys is only equal to K. Hence, a plurality of quantization regions may correspond to the same secret key. This is achieved by partitioning the quantization regions into clusters of size K and by reusing the secret keys $\mathbf{s}_1,\ldots, \mathbf{s}_K$ in each of the clusters. Moreover, since L channel samples are used to generate secret keys with $\log_2 K$ bits, the secret key generation rate is $\log_2 K/L$ bits per channel sample. FIG. 4 illustrates an example of a CVQ with M=16 and K=4. Referring to FIG. 4, even if Eve's estimated channel vector falls in the vicinity of Alice's estimated channel vector and the channels are correlated, Eve is still not able to obtain any information about the secret key since the CVQ causes each key to occur with equal probability in the vicinity of Eve's channel vector, thereby increasing the key entropy

In the SKG procedure of FIGs. 2 and 3, each channel vector is passed through N different CVQs, i.e., N different pairs of fine quantization and clustered key mapping functions $(Q_1, S_1), \ldots, (Q_N, S_N)$. Then, at Alice's side, the quantizer selection unit chooses the output of the CVQ that yields the smallest conditional KDP given

$$\mathbf{g}_{ab}^{(a)}.$$ The index of the CVQ that was chosen by Alice is sent to Bob, who then utilizes the same CVQ to quantize its effective channel vector $\mathbf{g}_{ab}^{(b)}.$ It should be noted that a large KDP occurs when the channel vector $\mathbf{g}_{ab}^{(a)}$

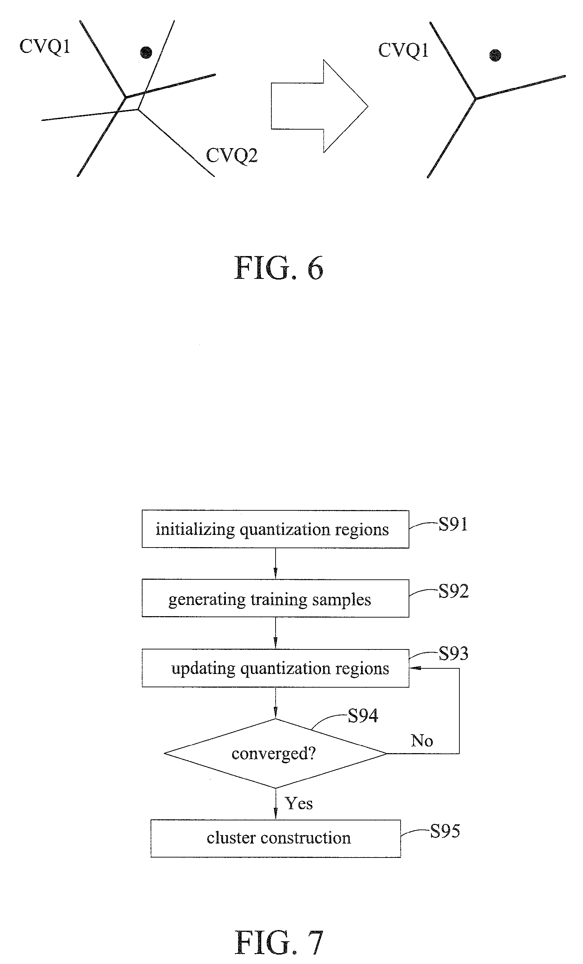

falls close to the boundary of a quantization region, causing the channel vector at Bob $\mathbf{g}_{ab}^{(b)}$ to fall into a different region more easily, as illustrated in FIG. 5. Therefore, if only a single CVQ is used, the above-described quantization boundary problem likely occurs, which results in a large KDP. In such a scenario, the quantizer selection unit according to the present disclosure allows to choose a CVQ with a boundary that is farthest away from the channel vector $\mathbf{g}_{ab}^{(a)}.$ For example, FIG. 6 shows a quantizer selection with two CVQs. However, since the number of CVQs that may be chosen is still limited, it is possible that the KDP is not sufficiently low for all CVQs. In this case, the channel sample (or its generated secret key) may be discarded.

In particular, the present disclosure proposes two criterions to perform sample selection, namely, distance-based and KDP-based criterions. In particular, when using the distance-based criterion, Alice (or Bob) first computes the distances between its decorrelated channel vector and the centroids of neighboring regions. Suppose that $\bar{\mathbf{g}}_{min,1}$ is the centroid of the first closest region and $\bar{\mathbf{g}}_{min,2}$ is the centroid of the second closest region. A decorrelated channel vector (or a sample) is discarded if $\dfrac{\left| \mathbf{g} - \bar{\mathbf{g}}_{min,1} \right|}{\left| \mathbf{g} - \bar{\mathbf{g}}_{min,2} \right|} \geq \epsilon$ for $\epsilon \in (0, 1)$. Alternatively, if the KDP-based criterion is used, a decorrelated channel sample is discarded when

$$\Pr(Q(\mathbf{g}_{ab}^{(a)}) \neq Q(\mathbf{g}_{ab}^{(b)}) | \mathbf{g}_{ab}^{(a)}) \geq \gamma,$$

where $\gamma \in (0,1)$. It should be noted that even though KDP is effectively reduced with this scheme, the effective key generation rate (in bits per channel sample) is slightly reduced due to the omission of decorrelated channel samples.

In the above-described SKG procedure, the CVQs play an integral role in terms of enhancing the randomness of the secret key. FIG. 7 shows a design flow of a CVQ. Referring to FIG.7, first, at step S91, quantization regions are initialized. Then, at step S92, training samples are generated. Thereafter, at step S93, a fine quantization function Q is designed. That is, the quantization regions are updated. Subsequently, at step S94, whether the solution converges is determined. If the solution is converged, the process goes to step S95, otherwise, the process goes to step S93. At step S95, a clustered key mapping function S is designed, that is, clusters are constructed. The above-described fine quantization function may be generated using any vector quantization scheme. In particular, two schemes, namely, minimum quadratic distortion (MQD) and minimum key disagreement probability (MKDP) schemes are used as vector quantization schemes that are suitable for secret key generation. However, these schemes only consider distortion (e.g., quadratic distortion or KDP) and do not guarantee the randomness of a generated secret key. Therefore, a key with low entropy may occur. To alleviate this problem, the present disclosure proposes a design criterion that takes entropy constraints into consideration in addition to distortion, including an entropy-constrained fine quantizer design and a clustered key mapping design. In addition, to increase the key conditional entropy, the fine quantizer design allows different outputs to occur more uniformly (i.e., the probability that a decorrelated channel vector may fall into each quantization region may be close to a uniform distribution), and at the same time, the clustered key mapping design groups quantization regions into clusters of equal size and reuses the same set of secret keys in each of the clusters. Such a design prevents an eavesdropper from easily guessing the key (e.g., by narrowing down the set of possible keys from its local channel estimate) and increases the key conditional entropy

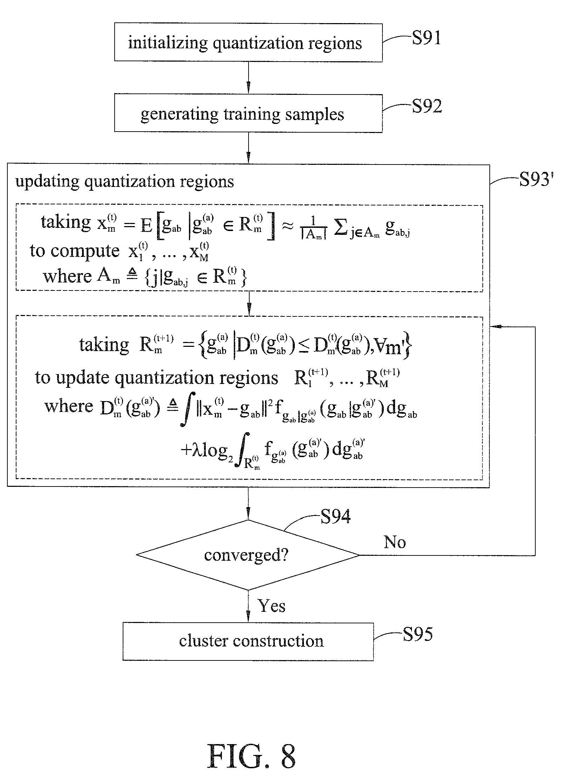

FIG. 8 shows an algorithm for designing an entropy-constrained minimum quadratic distortion (EC-MQD) fine quantizer. FIG. 8 differs from FIG. 7 in step S93', which is detailed as follows. In the design of an EC-MQD fine quantizer, the key idea is to map each decor-

related estimated channel vector $\mathbf{g}_{ab}^{(a)}$ at Alice (or $\mathbf{g}_{ab}^{(b)}$ at Bob) to a vector x in a finite set $\{\mathbf{x}_1, \ldots, \mathbf{x}_M\} \subset \mathbb{C}^L$ such that the vector is closest to the noiseless vector $\mathbf{g}_{ab}$. At the same time, entropy constraints are considered to increase the key entropy

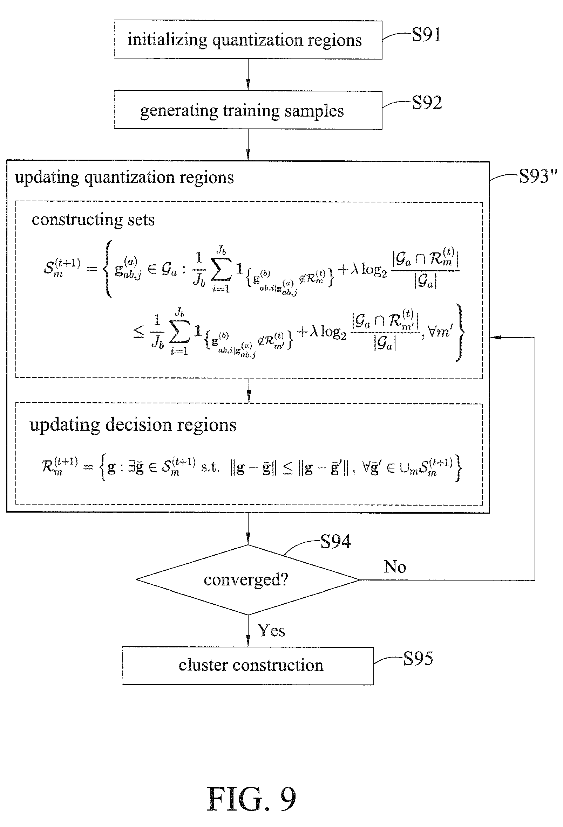

FIG. 9 shows an algorithm for designing an entropy-constrained minimum KDP (EC-MKDP) fine quantizer. FIG. 9 differs from FIG. 7 in step S93", which is detailed as follows. In the design of an EC-MKDP fine quantizer, the goal is to minimize the probability that two terminals applying the same quantizer yield different quantizer outputs, i.e., the KDP. At the same time, entropy constraints are considered to increase the key entropy

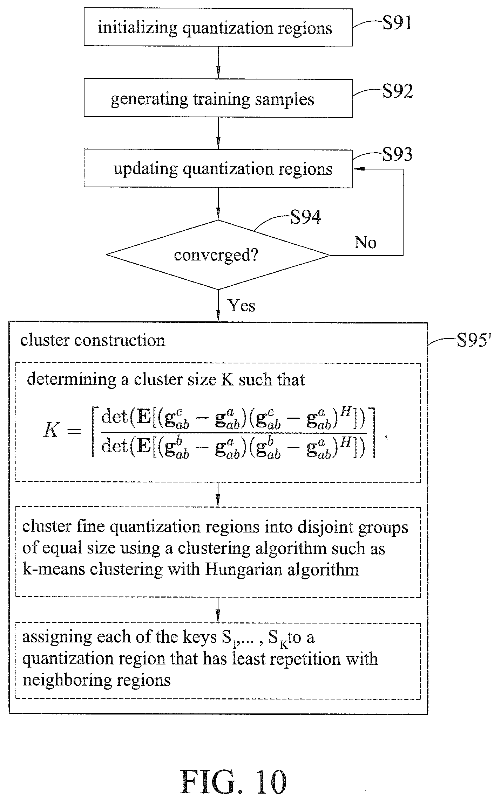

FIG. 10 shows an algorithm for a clustered key mapping design. FIG. 9 differs from FIG. 7 in step S95', which is detailed as follows. The clustered key mapping $S : \{1,..., M\} \rightarrow \{\mathbf{s}_1,...; \mathbf{s}_K\}$ effectively partitions the quantization regions into clusters of size $K$ and reuses the secret keys $\mathbf{s}_1,...,\mathbf{s}_K$ in each of the clusters. As such, even if the channel estimated by Eve is highly correlated with those estimated by Alice and Bob, the randomness may still be maintained so as to increase the key entropy The function $S$, in general, may be determined in three sub-steps of step S95', as illustrated in Fig. 10. Therein, the cluster size K (i.e., the number of quantization regions included in each cluster) should be as large as possible since it directly corresponds to the key generation rate, but should be small enough so that Eve is not able to narrow down the set of possible keys between the regions in a cluster, thereby increasing the key entropy

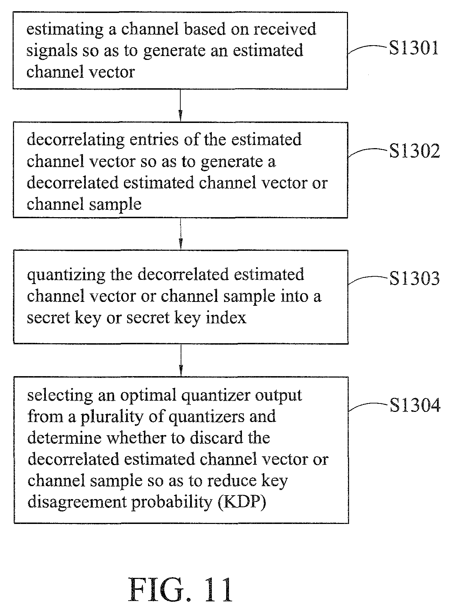

FIG. 11 is a schematic flow diagram showing a vector quantization based secret key generation method according to the present disclosure. The steps of the method may be implemented in combination with the above-described contents.

Referring to FIG. 11, first, at step S1301, a channel is estimated based on received signals so as to generate an estimated channel vector. Then, the process goes to step S1302.

At step S1302, entries of the estimated channel vector are decorrelated so as to generate a decorrelated estimated channel vector or a channel sample. Then, the process goes to step S1303.

At step S1303, the decorrelated estimated channel vector or the channel sample is quantized into a secret key or a secret key index. Then, the process goes to step S1304.

At step S1304, an optimal quantizer output is selected from a plurality of quantizers and whether to discard the decorrelated estimated channel vector or the channel sample is determined so as to reduce KDP.

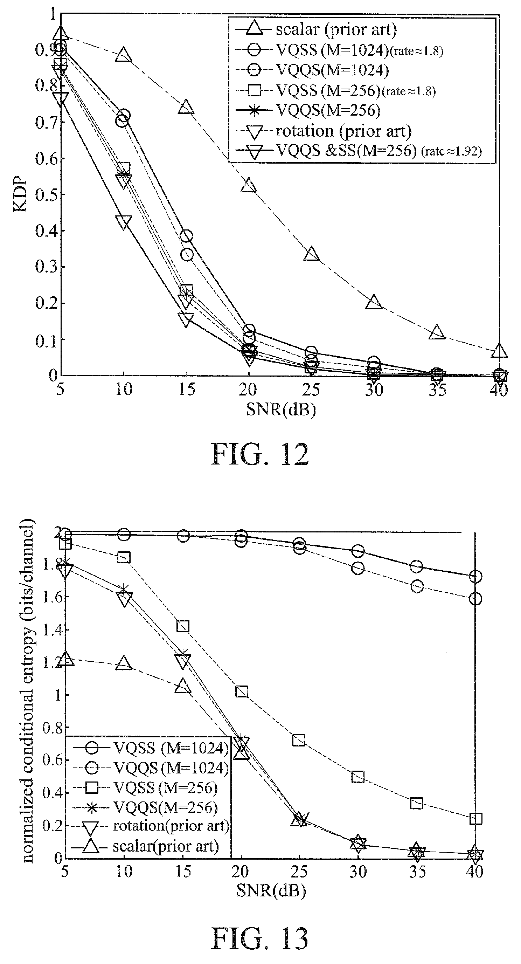

FIGs. 12 and 13 show performance comparisons between the present disclosure and the prior art.

FIG. 12 is a graph of KDP vs. SNR showing a comparison between the embodiments of the present disclosure and the prior art. In FIG. 12, VQSS indicates that the number of the CVQs 43 of FIG. 2 is only one and the selector 44 only has the sample selection unit 444 (i.e., the quantizer selection unit 442 is omitted), VQQS indicates that the selector 44 only has the quantizer selection unit 442 (i.e., the sample selection unit 444 is omitted), and VQQS & SS represents the embodiment of FIG. 2. Referring to FIG. 12, under the same SNR, VQQS & SS yields the lowest KDP.

FIG. 13 is a graph of normalized conditional entropy vs. SNR showing a comparison between the embodiments of the present disclosure and the prior art. Referring to FIG. 13, under the same SNR, VQSS with M=1024 yields the highest normalized conditional entropy

According to the present disclosure, a plurality of CVQs are used to quantize a decorrelated estimated channel vector or a channel sample into a secret key and then a selector is used to select an optimal quantizer output from the plurality of CVQs and determine whether to discard the decorrelated estimated channel vector or the channel sample so as to reduce KDP. Therefore, the present disclosure provides a secret key generation technique that is capable of increasing key entropy and reducing KDP.

The above-described descriptions of the detailed embodiments are only to illustrate the preferred implementation according to the present disclosure, and it is not to limit the scope of the present disclosure. Accordingly, all modifications and variations completed by those with ordinary skill in the art should fall within the scope of present disclosure defined by the appended claims.

**Claims**

1. A vector quantization based secret key generation device (30), **characterized in that** the vector quantization based secret key generation device (30) comprises:

   a channel estimator (31, 41) configured to estimate a channel based on received signals to generate an estimated channel vector;
   a channel decorrelator (32, 42) configured to decorrelate entries of the estimated channel vector to generate a decorrelated estimated channel vector or a channel sample;
   a plurality of clustered vector quantizers (CVQs) (33, 43) each configured to quantize the decorrelated estimated channel vector or the channel sample into a secret key (35) or a secret key index; and
   a selector (34, 44) configured to select an optimal quantizer output from the plurality of CVQs (33, 43) to generate an optimal quantizer index and determine whether to discard the decorrelated estimated channel vector or the channel sample to reduce key disagreement probability (KDP).

2. The vector quantization based secret key generation device (30) of claim 1, wherein the selector (34, 44) comprises a sample selection unit (444) configured to determine whether to discard the decorrelated estimated channel vector or the channel sample to reduce the KDP.

3. The vector quantization based secret key generation device (30) of claim 1, wherein the selector (34, 44) further comprises a quantizer selection unit (442) configured to select the optimal quantizer output to reduce the KDP.

4. The vector quantization based secret key generation device (30) of claim 1, wherein each of the plurality of CVQs (33, 43) comprises a fine quantization unit (332) and a clustered key unit (334) configured to compute with a fine quantization function and a clustered key mapping function, respectively, so as to quantize the decorrelated estimated channel vector into the secret key (35).

5. The vector quantization based secret key generation device (30) of claim 4, wherein in addition to distortion, the fine quantization function is designed to take entropy constraints into consideration so as to increase key entropy

6. The vector quantization based secret key generation device (30) of claim 5, wherein the clustered key mapping function is designed to group quantization regions into clusters of equal size and reuse a same set of secret keys in each of the clusters to increase the key entropy

7. A vector quantization based secret key generation system, **characterized in that** the vector quantization based secret key generation system comprises a receiver and a transmitter, wherein each of the receiver and the transmitter comprises the vector quantization based secret key generation device (30) according to any of the preceding claims, and wherein the selector (34, 44) of the transmitter transmits the optimal quantizer index and a determination of whether to discard the decorrelated estimated channel vector or the channel sample to the selector (34, 44) of the receiver.

8. The vector quantization based secret key generation system of claim 7, wherein the sample selection unit (444) of the transmitter transmits the determination of whether to discard the decorrelated estimated channel vector or the channel sample to the sample selection unit (444) of the receiver.

9. A vector quantization based secret key generation method, **characterized in that** the vector quantization based secret key generation method comprises:

   estimating a channel based on received signals to generate an estimated channel vector;
   decorrelating entries of the estimated channel vector to generate a decorrelated estimated channel vector or a channel sample;
   quantizing the decorrelated estimated channel vector or the channel sample into a secret key or a secret key index; and
   selecting an optimal quantizer output from a plurality of quantizers and determining whether to discard the decorrelated estimated channel vector or the channel sample to reduce key disagreement probability (KDP).

10. The vector quantization based secret key generation method of claim 9, wherein quantizing the decorrelated estimated channel vector into the secret key comprises computing with a fine quantization function and a clustered key mapping function to quantize the decorrelated estimated channel vector into the secret key.

**11.** The vector quantization based secret key generation method of claim 10, wherein in addition to distortion, the fine quantization function is designed to take entropy constraints into consideration so as to increase key entropy

**12.** The vector quantization based secret key generation method of claim 11, wherein the clustered key mapping function is designed to group quantization regions into clusters of equal size and reuse a same set of secret keys in each of the clusters to increase the key entropy

**13.** The vector quantization based secret key generation method of claim 9, wherein selecting the optimal quantizer output from the plurality of quantizers comprises generating and transmitting an optimal quantizer index.

**14.** The vector quantization based secret key generation method of claim 9, wherein determining whether to discard the decorrelated estimated channel vector or the channel sample comprises transmitting a determination of whether to discard the decorrelated estimated channel vector or the channel sample.

FIG. 1

FIG. 2

FIG. 3

FIG. 4

FIG. 5

FIG. 6

initializing quantization regions —S91

generating training samples —S92

updating quantization regions —S93

converged? —S94

No

Yes

cluster construction —S95

FIG. 7

initializing quantization regions —S91

generating training samples —S92

updating quantization regions ⌐S93'

$$\text{taking } x_m^{(t)} = E\left[ g_{ab} \left| g_{ab}^{(a)} \in R_m^{(t)} \right. \right] \approx \frac{1}{|A_m|} \sum_{j \in A_m} g_{ab,j}$$
$$\text{to compute } x_1^{(t)}, \ldots, x_M^{(t)}$$
$$\text{where } A_m \triangleq \left\{ j \left| g_{ab,j} \in R_m^{(t)} \right. \right\}$$

$$\text{taking } R_m^{(t+1)} = \left\{ g_{ab}^{(a)} \left| D_m^{(t)}(g_{ab}^{(a)}) \le D_m^{(t)}(g_{ab}^{(a)}), \forall m' \right. \right\}$$
$$\text{to update quantization regions } R_1^{(t+1)}, \ldots, R_M^{(t+1)}$$
$$\text{where } D_m^{(t)}(g_{ab}^{(a)'}) \triangleq \int \|x_m^{(t)} - g_{ab}\|^2 f_{g_{ab}|g_{ab}^{(a)}}(g_{ab}|g_{ab}^{(a)'}) dg_{ab}$$
$$+ \lambda \log_2 \int_{R_m^{(t)}} f_{g_{ab}^{(a)}}(g_{ab}^{(a)'}) dg_{ab}^{(a)'}$$

⟨S94⟩ converged?  No

Yes

cluster construction —S95

FIG. 8

initializing quantization regions —S91

generating training samples —S92

updating quantization regions —S93"

constructing sets

$$S_m^{(t+1)} = \left\{ g_{ab,j}^{(a)} \in \mathcal{G}_a : \frac{1}{J_b} \sum_{i=1}^{J_b} \mathbb{1}_{\left\{ g_{ab,i}^{(b)} \middle|_{g_{ab,j}^{(a)}} \notin \mathcal{R}_m^{(t)} \right\}} + \lambda \log_2 \frac{|\mathcal{G}_a \cap \mathcal{R}_m^{(t)}|}{|\mathcal{G}_a|} \right.$$

$$\left. \leq \frac{1}{J_b} \sum_{i=1}^{J_b} \mathbb{1}_{\left\{ g_{ab,i}^{(b)} \middle|_{g_{ab,j}^{(a)}} \notin \mathcal{R}_{m'}^{(t)} \right\}} + \lambda \log_2 \frac{|\mathcal{G}_a \cap \mathcal{R}_{m'}^{(t)}|}{|\mathcal{G}_a|}, \forall m' \right\}$$

updating decision regions

$$\mathcal{R}_m^{(t+1)} = \left\{ g : \exists \bar{g} \in S_m^{(t+1)} \text{ s.t. } \|g - \bar{g}\| \leq \|g - \bar{g}'\|, \forall \bar{g}' \in \cup_m S_m^{(t+1)} \right\}$$

converged? —S94

No

Yes

cluster construction —S95

# FIG. 9

initializing quantization regions — S91

↓

generating training samples — S92

↓

updating quantization regions — S93

↓

converged? — S94

No →

Yes ↓

cluster construction — S95'

determining a cluster size K such that

$$K = \left\lceil \frac{\det(\mathbf{E}[(\mathbf{g}_{ab}^{e} - \mathbf{g}_{ab}^{a})(\mathbf{g}_{ab}^{e} - \mathbf{g}_{ab}^{a})^{H}])}{\det(\mathbf{E}[(\mathbf{g}_{ab}^{b} - \mathbf{g}_{ab}^{a})(\mathbf{g}_{ab}^{b} - \mathbf{g}_{ab}^{a})^{H}])} \right\rceil .$$

↓

cluster fine quantization regions into disjoint groups of equal size using a clustering algorithm such as k-means clustering with Hungarian algorithm

↓

assigning each of the keys $S_1, \ldots, S_K$ to a quantization region that has least repetition with neighboring regions

# FIG. 10

estimating a channel based on received signals so as to generate an estimated channel vector — S1301

decorrelating entries of the estimated channel vector so as to generate a decorrelated estimated channel vector or channel sample — S1302

quantizing the decorrelated estimated channel vector or channel sample into a secret key or secret key index — S1303

selecting an optimal quantizer output from a plurality of quantizers and determine whether to discard the decorrelated estimated channel vector or channel sample so as to reduce key disagreement probability (KDP) — S1304

# FIG. 11

FIG. 12

FIG. 13

Europäisches
Patentamt

European
Patent Office

Office européen
des brevets

# EUROPEAN SEARCH REPORT

**Application Number**

EP 15 20 2533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HOU-TUNG LI ET AL: "Secret key generation over correlated wireless fading channels using vector quantization", SIGNAL&INFORMATION PROCESSING ASSOCIATION ANNUAL SUMMIT AND CONFERENCE (APSIPA ASC), 2012 ASIA-PACIFIC, IEEE, 3 December 2012 (2012-12-03), pages 1-7, XP032310000, ISBN: 978-1-4673-4863-8 * page 1 - page 5 * | 1-14 | INV. H04L9/08 |
| Y | US 2014/219449 A1 (SHATTIL STEVE J [US] ET AL) 7 August 2014 (2014-08-07) * paragraph [0120] - paragraph [0150] * | 1-14 | |
| A | YOUSSEF EL HAJJ SHEHADEH ET AL: "An Optimal Guard-Intervals Based Mechanism for Key Generation from Multipath Wireless Channels", NEW TECHNOLOGIES, MOBILITY AND SECURITY (NTMS), 2011 4TH IFIP INTERNATIONAL CONFERENCE ON, IEEE, 7 February 2011 (2011-02-07), pages 1-5, XP031982192, DOI: 10.1109/NTMS.2011.5720584 ISBN: 978-1-4244-8705-9 * page 3 * | 1-14 | |

TECHNICAL FIELDS SEARCHED (IPC)

H04L

-/--

The present search report has been drawn up for all claims

| Place of search | Date of completion of the search | Examiner |
|---|---|---|
| Munich | 15 March 2017 | Apostolescu, Radu |

EPO FORM 1503 03.82 (P04C01)

Europäisches
Patentamt

European
Patent Office

Office européen
des brevets

# EUROPEAN SEARCH REPORT

Application Number

EP 15 20 2533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SANA TMAR BEN HAMIDA ET AL: "An Adaptive Quantization Algorithm for Secret Key Generation Using Radio Channel Measurements", NEW TECHNOLOGIES, MOBILITY AND SECURITY (NTMS), 2009 3RD INTERNATIONAL CONFERENCE ON, 1 January 2009 (2009-01-01), pages 1-5, XP055354732, Piscataway, NJ, USA DOI: 10.1109/NTMS.2009.5384826 ISBN: 978-1-4244-4765-7 * page 3 - page 4 * ----- | 1-14 | |

TECHNICAL FIELDS
SEARCHED    (IPC)

The present search report has been drawn up for all claims

| Place of search | Date of completion of the search | Examiner |
|---|---|---|
| Munich | 15 March 2017 | Apostolescu, Radu |

## ANNEX TO THE EUROPEAN SEARCH REPORT
## ON EUROPEAN PATENT APPLICATION NO.

EP 15 20 2533

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2017

| Patent document cited in search report | Publication date | Patent family member(s) | Publication date |
|---|---|---|---|
| US 2014219449 A1 | 07-08-2014 | US 2014219449 A1<br>US 2015009945 A1<br>US 2016094989 A1<br>US 2016119044 A1<br>US 2017034835 A1 | 07-08-2014<br>08-01-2015<br>31-03-2016<br>28-04-2016<br>02-02-2017 |

EPO FORM P0459

For more details about this annex : see Official Journal of the European Patent Office, No. 12/82